# FASCICULE DE BREVET EUROPEEN

(11) **EP 2 861 513 B1**
(45) Date de publication et mention de la délivrance du brevet: **11.10.2017**
(21) Numéro de dépôt: 13728201.8
(22) Date de dépôt: 13.06.2013
(51) Int. Cl.: B65G 43/10

(54) **SYSTEME DE CONVOYAGE MODULAIRE ET PROCEDE CORRESPONDANTS.**
MODULARES FÖRDERSYSTEM UND ZUGEHÖRIGES VERFAHREN
MODULAR CONVEYOR SYSTEM, AND CORRESPONDING CONTROL DEVICE AND METHOD

(30) Priorité: 15.06.2012 FR 1255646
(43) Date de publication de la demande: 22.04.2015
(73) Titulaire: Savoye, 21000 Dijon (FR)
(72) Inventeur: COLLOT, Patrick, F-21250 Corberon (FR)
(74) Mandataire: Vidon Brevets & Stratégie
(86) Numéro de dépôt international: PCT/EP2013/062213
(87) Numéro de publication internationale: WO 2013/186288

(56) Documents cités:
- WO-A1-2011/083783
- WO-A2-2006/102691
- DE-A1-102004 038 135
- US-A- 5 285 887

## Description

### 1. DOMAINE DE L'INVENTION

Le domaine de l'invention est celui du convoyage de charges isolées, lourdes ou légères.

Plus précisément, l'invention concerne un système de convoyage modulaire, c'est-à-dire un système de convoyage comprenant une pluralité de modules successifs, assemblés selon une séquence déterminée et formant un tronçon de convoyage. Chaque module comprend un dispositif de contrôle et au moins une zone associée à et pilotée par le dispositif de contrôle. Chaque dispositif de contrôle, compris dans un module donné, comprend des moyens de communication avec les dispositifs de contrôle compris dans les modules placés de part et d'autre du module donné dans la séquence. Chaque zone comprend au moins un actionneur, recevant un signal de commande venant du dispositif de contrôle associé, et au moins un capteur, émettant un signal de présence vers le dispositif de contrôle associé.

L'invention s'applique notamment, mais non exclusivement, dans le domaine de la production ou de la logistique.

### 2. ARRIÈRE-PLAN TECHNOLOGIQUE

Les systèmes de convoyage modulaire sont notamment, mais non exclusivement, utilisés pour mettre en oeuvre un convoyage de type « accumulation sans pression », aussi appelé « convoyage ZPA » (pour « Zero Pressure Accumulation » en anglais). Le convoyage ZPA est utilisé lorsque les charges (colis) à transporter ne doivent pas se toucher (fragilité, accumulation dans les courbes...). Il s'agit alors de parceller le système de convoyage (aussi appelé convoyeur) en différentes zones, chacune d'entre elles ne contenant qu'une seule charge. Ces zones sont toutes indépendantes et libèrent une charge lorsque la zone suivante est libre. En général, chaque zone intègre son propre système de motorisation (actionneur) et de détection.

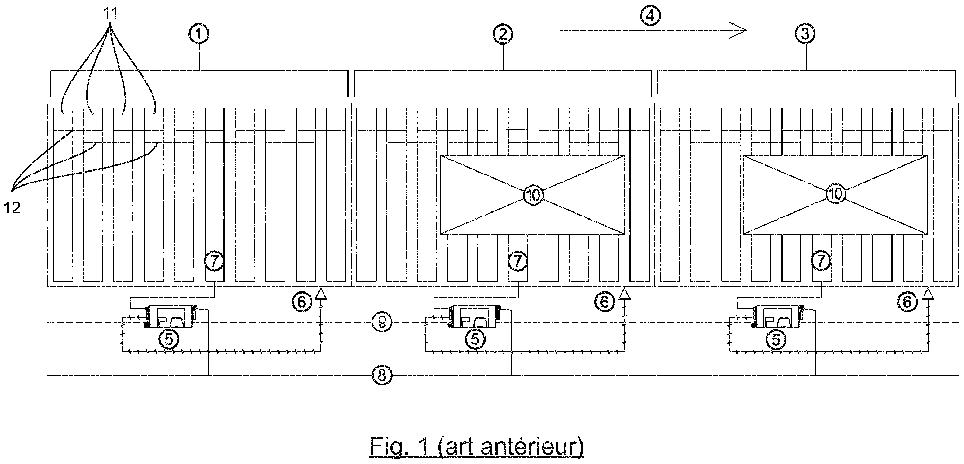

On décrit maintenant, en relation avec la **figure 1****,** une solution connue de système de convoyage modulaire, proposée par la société Interroll. Les charges (colis) sont référencées 10. La flèche référencée 4 indique le sens de convoyage. Dans l'exemple de la figure 1, le système de convoyage (ou convoyeur) comprend trois modules. Chaque module comprend une zone 1, 2 ou 3 pilotée par un dispositif de contrôle 5 (appelé « ZoneControl »). Chaque zone comprend un rouleau motorisé 7, un capteur 6, des rouleaux esclaves 11 (entraînés en cascade par le rouleau motorisé, via des courroies de transmission 12). Les dispositifs de contrôle 5 sont connectés entre eux via des connexions 9, par exemple de type bus P2P (pour « Peer to Peer » en anglais, ou « pair à pair » en français), afin d'échanger des signaux de démarrage, chaque dispositif de contrôle 5 communiquant d'une part avec un dispositif de contrôle amont et d'autre part avec un dispositif de contrôle aval (voir l'exemple de fonctionnement ci-après). Chaque dispositif de contrôle 5 est par ailleurs connecté à un câble d'alimentation 8. Chaque dispositif de contrôle 5 envoie un signal de commande vers l'actionneur 7 de la zone qu'il pilote, et reçoit un signal de présence venant du capteur 6 de la zone qu'il pilote. Chaque dispositif de contrôle 5 comprend des moyens de configuration (sous la forme de commutateurs DIP) permettant de configurer des paramètres de la fonction de convoyage réalisée par la zone pilotée, et notamment : la vitesse de convoyage de la zone pilotée, le sens de rotation du rouleau motorisé de la zone pilotée, la logique pour le convoyage ZPA (traitement individuel ou groupé (mode train)).

Le fonctionnement du système de la figure 1 est par exemple le suivant :
- le dispositif de contrôle de la zone 3 reçoit un signal de démarrage : il actionne le rouleau motorisé 7 de la zone 3 afin que le premier colis 10 quitte la zone 3 (et donc le convoyeur) ;
- le dispositif de contrôle de la zone 2 reçoit un signal de démarrage venant du dispositif de contrôle de la zone 3 : il actionne le rouleau motorisé 7 de la zone 2 afin que le second colis 10 passe de la zone 2 à la zone 3 ;
- le dispositif de contrôle de la zone 3 reçoit un signal de démarrage : il actionne le rouleau motorisé 7 de la zone 3 afin que le second colis 10 quitte la zone 3 (et donc le convoyeur).

La solution connue de système de convoyage modulaire, détaillée ci-dessus, présente plusieurs inconvénients, et notamment :
- la décentralisation du pilotage n'est pas optimale. En effet, chaque dispositif de contrôle pilote une zone en fonction de signaux de commande (signaux de démarrage) qu'il reçoit d'un des deux dispositifs de contrôle auxquels il est connecté. Mais chaque dispositif de contrôle n'est pas capable d'adapter dynamiquement le pilotage de sa zone. Les deux dispositifs de contrôle auxquels il est connecté ne lui transmettent pas d'informations permettant une telle adaptation dynamique (pas d'informations relatives à des sous-tronçons, amont et aval, situés de part et d'autre de la zone pilotée) ;
- elle ne permet pas de disposer de manière simple d'informations relatives à l'ensemble du tronçon (par exemple le taux de remplissage du convoyeur). A fortiori, elle ne permet pas de communiquer de telles informations de tronçon vers l'extérieur du tronçon, c'est-à-dire à destination d'un ou plusieurs autres tronçons, ou encore d'un système de supervision informatique (par exemple de type WCS (Warehouse Control System), WMS (Warehouse Management System), écrans de pilotage...) ;
- elle ne permet pas de faire transiter, en même temps que les charges transportées d'une extrémité à l'autre du tronçon, des informations de suivi qui sont associées à ces charges (« tracking information » en anglais) ;
- en termes de comportement (c'est-à-dire de fonction), elle ne permet de configurer (par commutateurs DIP) que les paramètres de la fonction de convoyage réalisée par la zone pilotée (paramètres indiquant par exemple que la fonction de convoyage est de type ZPA, « pas à pas »...). Il n'y a pas de choix sur la nature de la fonction : seule une fonction entre fonction de convoyage est proposée (qui est paramétrable) ; aucune autre fonction spécifique (par exemple une fonction de poste de préparation de commande ou une fonction de poste d'étiquetage) n'est proposée ;
- elle permet de configurer la vitesse de convoyage (globale ou de la zone pilotée), mais elle ne permet pas au dispositif de contrôle d'adapter des consignes de fonctionnement qui sont éventuellement indexées sur cette vitesse de convoyage (par exemple, une consigne de déclaration d'un défaut de type « bourrage ») ;
- les dispositifs de contrôle s'installent sur un système de convoyage (ou convoyeur) déjà constitué mécaniquement. En d'autres termes, chaque dispositif de contrôle n'est pas pré-assemblé avec une zone, pour former un module pré-assemblé, parmi un nombre limité de modules pré-assemblés standards. Ceci ne rend pas très facile la migration d'un module vers une nouvelle architecture (réutilisation, recyclage, seconde monte).
DE 10 2004 038 135 A1 décrit un système selon le préambule de la revendication 1.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir un système de convoyage modulaire offrant une décentralisation optimale du pilotage, en permettant à chaque dispositif de contrôle d'adapter dynamiquement le pilotage de sa zone.

Un autre objectif d'au moins un mode de réalisation de l'invention est de disposer de manière simple d'informations relatives à l'ensemble du tronçon (par exemple le taux de remplissage du convoyeur).

Au moins un mode de réalisation de l'invention a également pour objectif de fournir un tel système pouvant être formé par assemblage de modules standards, choisis parmi un nombre limité de modules distincts (composant une librairie). La standardisation des modules de convoyage vise à réduire les coûts globaux, les temps d'études, de fabrication, de livraison, de mise en oeuvre sur le site d'exploitation et de maintenance. La standardisation vise également à faciliter la réutilisation des modules dans une autre configuration d'assemblage (recyclage).

Un autre objectif d'au moins un mode de réalisation de l'invention est de fournir un tel système permettant de configurer la nature même de la fonction réalisée par chaque zone (choix entre la fonction de convoyage et au moins une autre fonction spécifique).

Un objectif complémentaire d'au moins un mode de réalisation de l'invention est de fournir un tel système permettant de faire transiter, en même temps que les charges, des informations de suivi qui sont associées à ces charges.

### 4. EXPOSÉ DE L'INVENTION

Selon l'invention, il est proposé un système de convoyage selon la revendication 1, comprenant des modules successifs assemblés selon une séquence déterminée et formant un tronçon de convoyage, chaque module comprenant un dispositif de contrôle et au moins une zone associée à et pilotée par le dispositif de contrôle, chaque dispositif de contrôle, compris dans un module donné, comprenant des moyens de communication avec les dispositifs de contrôle compris dans les modules placés de part et d'autre du module donné dans la séquence, chaque zone comprenant au moins un actionneur, recevant un signal de commande venant du dispositif de contrôle associé, et au moins un capteur, émettant un signal de présence vers le dispositif de contrôle associé. Les dispositifs de contrôle comprennent des moyens d'exécution d'un mécanisme de propagation et enrichissement d'informations de tronçon, de proche en proche entre zones, depuis les deux zones d'extrémité du tronçon de convoyage, permettant de disposer, pour chaque zone, d'informations de tronçon relatives à des sous-tronçons, amont et aval, situés de part et d'autre de ladite zone. Chaque dispositif de contrôle comprend des moyens d'adaptation dynamique du comportement de chaque zone qu'il pilote, en fonction des informations de tronçon dont il dispose grâce au mécanisme de propagation et enrichissement.

En d'autres termes, les dispositifs de contrôle comprennent des moyens d'exécution d'un mécanisme de propagation et enrichissement d'informations quantitatives de tronçon, de proche en proche entre zones et par incrémentation d'un compteur pour chaque information quantitative, depuis les deux zones d'extrémité du tronçon de convoyage, permettant de disposer, pour chaque zone : d'au moins une première information quantitative de tronçon, propagée et enrichie de l'amont vers l'aval et relative à toutes les zones d'un sous-tronçon amont situé en amont de ladite zone, et/ou d'au moins une deuxième information quantitative de tronçon, propagée et enrichie de l'aval vers l'amont et relative à toutes les zones d'un sous-tronçon aval situé en aval de ladite zone. Chaque dispositif de contrôle comprend des moyens d'adaptation dynamique du comportement de chaque zone qu'il pilote, en fonction de ladite au moins une première information quantitative de tronçon et/ou de ladite au moins une deuxième information quantitative de tronçon, dont il dispose pour ladite zone grâce au mécanisme de propagation et enrichissement.

Le principe général de l'invention consiste donc à décentraliser le pilotage, au plus près des actionneurs compris dans les zones. Ce mode de réalisation particulier de l'invention repose sur une approche tout à fait nouvelle et inventive, avec la mise en oeuvre par les dispositifs de contrôle d'un mécanisme de propagation et enrichissement d'informations de tronçon, de proche en proche entre zones (deux zones consécutives étant pilotée soit par le même dispositif de contrôle, soit par deux dispositifs de contrôle consécutifs).

Ainsi, on dispose pour chaque zone d'informations relatives à des sous-tronçons, amont et aval, situés de part et d'autre de cette zone. Le dispositif de contrôle qui pilote cette zone peut adapter dynamiquement le pilotage en fonction de ces informations.

La décentralisation du pilotage permet d'anticiper les phases de tests sur le site client. Dès lors qu'un module est alimenté en énergie, il devient fonctionnel, sans qu'aucune information logique de démarrage ne soit nécessaire.

En outre, aux deux zones d'extrémités du tronçon, on dispose donc d'informations relatives à l'ensemble du tronçon.

Selon une caractéristique particulière, pour chaque zone, les informations de tronçon relatives à chaque sous-tronçon, amont ou aval, situé de part ou d'autre de ladite zone (c'est-à-dire ladite au moins une première information quantitative de tronçon et ladite au moins une deuxième information quantitative de tronçon) appartiennent au groupe comprenant :
- le nombre de modules compris dans le sous-tronçon ;
- le nombre de zones comprises dans le sous-tronçon ;
- le nombre de zones libres comprises dans le sous-tronçon ;
- le nombre de zones libres adjacentes comprises dans le sous-tronçon ;
- le nombre de zones vides comprises dans le sous-tronçon ;
- le nombre de zones réservées comprises dans le sous-tronçon ;
- le nombre de zones en défaut de bourrage dans le sous-tronçon ;
- le nombre de charges présentes dans le sous-tronçon ;
- le nombre de charges en attente en extrémité du sous-tronçon ;
- le nombre de charges présentes sur la zone adjacente du sous-tronçon ;
- le nombre d'actionneurs en marche dans le sous-tronçon ;
- le nombre d'actionneurs en phase de démarrage dans le sous-tronçon.

Cette liste n'est pas exhaustive.

Selon une caractéristique particulière, les moyens d'adaptation dynamique du comportement d'une zone donnée agissent sur au moins un paramètre appartenant au groupe comprenant :
- la vitesse de convoyage de la zone donnée ;
- le nombre total, pour le tronçon de convoyage, de zones dont l'actionneur est en phase de démarrage ;
- le nombre total, pour le tronçon de convoyage, de zones dont l'actionneur est en marche.

Cette liste n'est pas exhaustive.

Selon une caractéristique particulière, les moyens d'adaptation dynamique du comportement d'une zone donnée agissent sur la vitesse de convoyage de la zone donnée, et sur au moins un paramètre de fonctionnement qui est dépendant de ladite vitesse de convoyage.

De cette façon, non seulement le dispositif de contrôle décide seul comment adapter la vitesse de convoyage d'une zone qu'il pilote, mais en outre il recalcule et adapte les paramètres de fonctionnement (consignes de sécurité notamment) liés à la nouvelle vitesse de convoyage.

Selon une caractéristique particulière, les dispositifs de contrôle comprennent des moyens d'exécution d'un mécanisme de propagation d'informations de suivi de charges, de proche en proche entre zones, permettant de faire transiter, entre les deux zones d'extrémité du tronçon de convoyage, des informations de suivi relatives à des charges transportées par le système.

Ainsi, les dispositifs de contrôle font transiter, en même temps que les charges, des informations de suivi qui sont associées à ces charges.

Selon une caractéristique particulière, chaque dispositif de contrôle comprend des moyens de configuration permettant de définir, pour chaque zone pilotée :
- une fonction, parmi une fonction de convoyage et au moins une fonction spécifique, liée à la nature du ou des équipements, y compris ledit au moins un actionneur, compris dans ladite zone pilotée ; et
- des paramètres de fonctionnement nominaux associés à ladite fonction, y compris une vitesse de convoyage nominale.

De cette façon, il est possible d'utiliser des modules standards, choisis parmi un nombre limité de modules distincts (composant une librairie). Il est proposé un choix sur la nature même de la fonction : fonction de convoyage ou bien autre fonction spécifique.

Selon une caractéristique particulière, ladite au moins une fonction spécifique appartient au groupe comprenant :
- une fonction de poste de préparation de commandes ;
- une fonction de poste de réintroduction de charges ;
- une fonction de poste d'étiquetage ;
- une fonction de poste de contrôle (qualité, poids, gabarit, etc).

Cette liste n'est pas exhaustive.

Selon une caractéristique particulière, chaque module est un ensemble pré-assemblé, disponible avant installation du système sur un site d'exploitation.

Ainsi, chaque dispositif de contrôle est pré-assemblé avec une ou plusieurs zone, pour former un module pré-assemblé. On utilise avantageusement un nombre limité de modules pré-assemblés standards (ce nombre dépend essentiellement du nombre de zones dont les équipements (actionneurs notamment) sont distincts. Ceci facilite la migration d'un module vers une nouvelle architecture (réutilisation, recyclage, seconde monte).

Dans un autre mode de réalisation de l'invention, il est proposé un dispositif de contrôle, adapté pour être intégré dans un module donné d'un système de convoyage comprenant des modules successifs assemblés selon une séquence déterminée et formant un tronçon de convoyage, le module donné comprenant, outre le dispositif de contrôle, au moins une zone associée à et pilotée par le dispositif de contrôle, le dispositif de contrôle comprenant des moyens de communication avec les dispositifs de contrôle compris dans les modules placés de part et d'autre du module donné dans la séquence, chaque zone pilotée par le dispositif de contrôle comprenant au moins un actionneur, recevant un signal de commande venant du dispositif de contrôle, et au moins un capteur, émettant un signal de présence vers le dispositif de contrôle. Ledit dispositif de contrôle comprend :
- des moyens d'exécution d'un mécanisme de propagation et enrichissement d'informations de tronçon, de proche en proche entre zones, depuis les deux zones d'extrémité du tronçon de convoyage, permettant de disposer, pour chaque zone, d'informations de tronçon relatives à des sous-tronçons, amont et aval, situés de part et d'autre de ladite zone ; et
- des moyens d'adaptation dynamique du comportement de chaque zone qu'il pilote, en fonction des informations de tronçon dont il dispose grâce au mécanisme de propagation et enrichissement.
Selon l'invention, il est proposé un procédé de gestion d'un système de convoyage selon la revendication 9, comprenant des modules successifs assemblés selon une séquence déterminée et formant un tronçon de convoyage, chaque module comprenant un dispositif de contrôle et au moins une zone associée à et pilotée par le dispositif de contrôle, chaque dispositif de contrôle, compris dans un module donné, comprenant des moyens de communication avec les dispositifs de contrôle compris dans les modules placés de part et d'autre du module donné dans la séquence, chaque zone comprenant au moins un actionneur, recevant un signal de commande venant du dispositif de contrôle associé, et au moins un capteur, émettant un signal de présence vers le dispositif de contrôle associé. Chacun des dispositifs de contrôle effectue :
- un mécanisme de propagation et enrichissement d'informations de tronçon, de proche en proche entre zones, depuis les deux zones d'extrémité du tronçon de convoyage, permettant de disposer, pour chaque zone, d'informations de tronçon relatives à des sous-tronçons, amont et aval, situés de part et d'autre de ladite zone ; et
- une adaptation dynamique du comportement de chaque zone qu'il pilote, en fonction des informations de tronçon dont il dispose grâce au mécanisme de propagation et enrichissement.

En d'autres termes, chacun des dispositifs de contrôle effectue :
- un mécanisme de propagation et enrichissement d'informations quantitatives de tronçon, de proche en proche entre zones et par incrémentation d'un compteur pour chaque information quantitative, depuis les deux zones d'extrémité du tronçon de convoyage, permettant de disposer, pour chaque zone :
   * d'au moins une première information quantitative de tronçon, propagée et enrichie de l'aval vers l'amont et relative à toutes les zones d'un sous-tronçon amont, situé en amont de ladite zone ; et
   * d'au moins une deuxième information quantitative de tronçon, propagée et enrichie de l'amont vers l'aval et relative à toutes les zones d'un sous-tronçon aval, situé en aval de ladite zone ; et
- une adaptation dynamique du comportement de chaque zone qu'il pilote, en fonction de ladite au moins une première information quantitative de tronçon et/ou de ladite au moins une deuxième information quantitative de tronçon, dont il dispose pour ladite zone grâce au mécanisme de propagation et enrichissement.
Selon l'invention, il est proposé d'utiliser un produit programme d'ordinateur dans le système de l'invention, qui comprend des instructions de code de programme pour la mise en oeuvre du procédé précité (dans l'un quelconque de ses différents modes de réalisation), lorsque ledit programme est exécuté sur un ordinateur. Selon l'invention, il est proposé d'utiliser un médium de stockage lisible par ordinateur et non transitoire dans le système de l'invention, stockant un programme d'ordinateur comprenant un jeu d'instructions exécutables par un ordinateur pour mettre en oeuvre le procédé précité (dans l'un quelconque de ses différents modes de réalisation).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente un synoptique d'un exemple de système connu ;
- la figure 2 présente un schéma-bloc d'un module selon un mode de réalisation particulier de l'invention ; et
- la figure 3 présente un synoptique d'un système selon un mode de réalisation particulier de l'invention.

### 6. DESCRIPTION DÉTAILLÉE

Sur toutes les figures du présent document, les éléments et étapes identiques sont désignés par une même référence numérique.

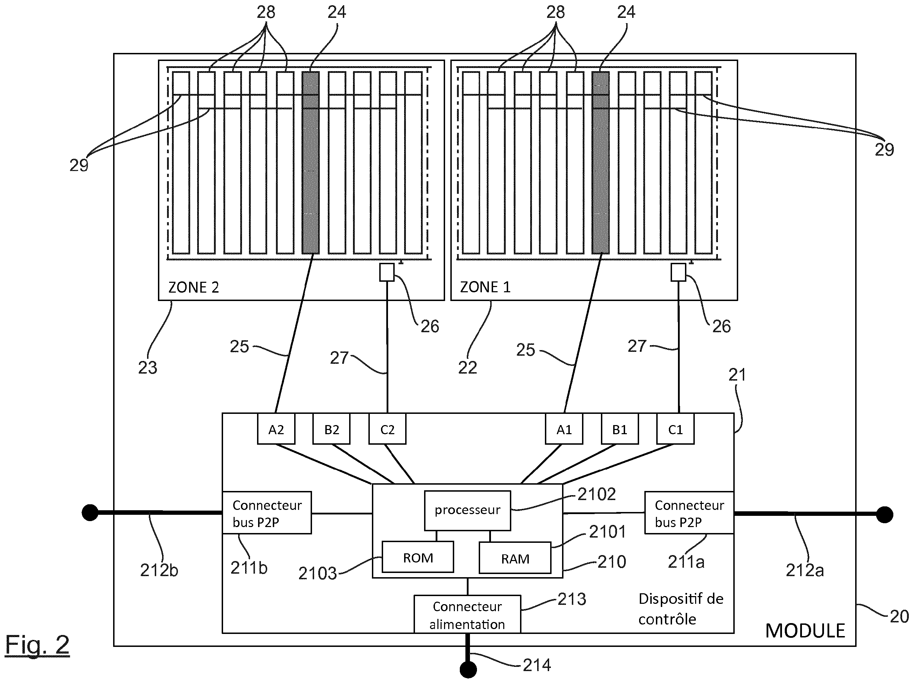

On présente maintenant, en relation avec la **figure 2****,** un module 20 selon un mode de réalisation particulier de l'invention.

Le module 20 est un module double comprenant un dispositif de contrôle 21 et deux zones 22, 23 (aussi notées « zone 1 » et « zone 2 ») associées à et pilotées par le dispositif de contrôle 21.

Chaque zone 22, 23 comprend :
- un rouleau motorisé (actionneur) 24 recevant, via un lien 25, un signal de commande venant du dispositif de contrôle 21 ;
- des rouleaux esclaves 28, entraînés en cascade par le rouleau motorisé 24, via des courroies de transmission 29 ; et
- un capteur 26 émettant, via un lien 27, un signal de présence 27 vers le dispositif de contrôle 21.

Dans des variantes, chaque zone peut comprendre plusieurs actionneurs (au lieu d'un seul) et/ou plusieurs capteurs (au lieu d'un seul).

Le dispositif de contrôle 21 comprend :
- une unité de pilotage 210 (voir description détaillée ci-dessous) ;
- deux connecteurs de bus 211a, 211b, permettant chacun une connexion avec un autre dispositif de contrôle, via un bus P2P 212a, 212b ;
- un connecteur d'alimentation 213, connecté à un câble d'alimentation 214 permettant d'alimenter en énergie le dispositif de contrôle 21, ainsi que le rouleau motorisé (actionneur) 24 et le capteur 26 ;
- pour chacune des deux zones pilotées 22, 23 :
   ✔ un connecteur A1, A2 auquel est connecté le lien 25 véhiculant le signal de commande du rouleau motorisé 24 ;
   ✔ un connecteur C1, C2 auquel est connecté le lien 27 véhiculant le signal de présence venant du capteur 26 ;
   ✔ des moyens de configuration B1, B2 (réalisés par exemple sous la forme de commutateurs DIP).

Dans une variante, la configuration de chaque zone est réalisée grâce des messages de configuration reçus via le bus P2P (212a, 212b).

Pour chaque zone pilotée, les moyens de configuration B1, B2 permettent de définir :
- une fonction, parmi une fonction de convoyage classique (« ZPA », « pas à pas »...) et au moins une fonction spécifique, liée à la nature du ou des équipements (rouleau motorisé 24, rouleau esclaves 28, etc) compris dans la zone pilotée ; et
- des paramètres de fonctionnement nominaux associés à cette fonction, y compris une vitesse de convoyage nominale.

Par fonction spécifique, on entend une fonction autre qu'une fonction de convoyage classique, comme par exemple une fonction de poste de préparation de commandes, une fonction de poste de réintroduction de charges, une fonction de poste d'étiquetage, une fonction de poste de contrôle (qualité, poids, gabarit, etc)...

Pour définir une fonction spécifique d'une zone donnée, les moyens de configuration définissent par exemple :
- les équipements de cette zone donnée (convoyeur à rouleaux motorisés, courbe à rouleaux, tapis à bandes, convoyeur escamotable pivotant, convoyeur escamotable relevable, convoyeur de pesage statique ou dynamique, etc) ; et
- le fonctionnement (comportement) prédéfini de ces équipements (exemples de fonctionnement: poste de travail opérateur en ligne, zone de réintroduction poste opérateur, zone de gestion de l'accumulation pour réintroduction manuelle, poste d'étiquetage, poste de contrôle gabarit, etc).

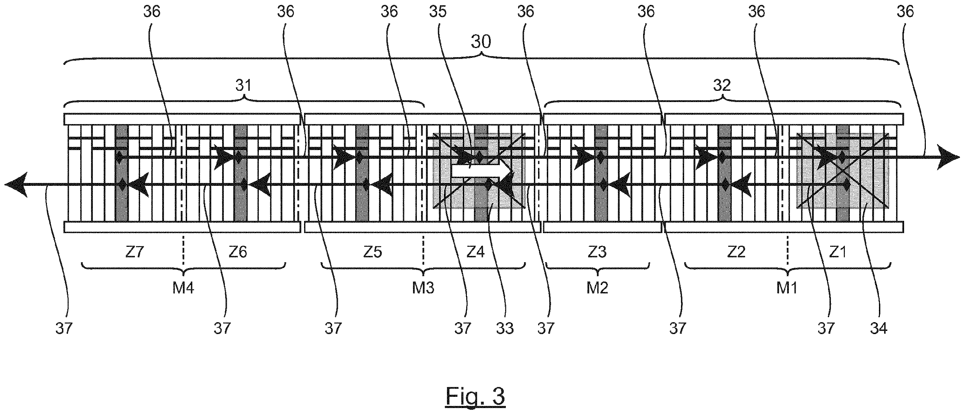

Un module pouvant contenir deux zones, la position des fonctions est par exemple précisée dans le programme exécuté par l'unité de pilotage et définie par rapport au sens normal d'avance du convoyeur (flèche référencée 35 sur la figure 3).

La configuration de chaque comportement en vitesse inclut la configuration de la vitesse de convoyage nominale et des paramètres de fonctionnement associés. Il est par exemple possible de choisir, avec un commutateur DIP, parmi quinze jeux de réglages prédéfinis (chaque réglage correspond à une cadence de fonctionnement prédéfinie, permettant de convoyer en standard de 10c/min à 60c/min - c/min signifiant « charges par minute »).

Dans une variante, la consigne de vitesse ainsi que les principaux réglages associés peuvent être modifiés via le bus P2P, pour répondre à des contraintes de fonctionnements spécifiques. Les consignes peuvent s'appliquer à une zone particulière ou à l'ensemble du tronçon (c'est-à-dire à toutes les zones le constituant).

Dans une mise en oeuvre particulière, les moyens de configuration B1, B2 comprennent un commutateur particulier permettant de définir le sens de convoyage. Dans une variante, le sens du convoyage peut être inversé par une information sur le bus P2P. On notera que la fonction de chacune des zones n'est pas influencée par l'inversion du sens de déplacement des produits (un poste de travail opérateur ne change pas physiquement d'endroit si le sens d'avance des produits change).

Il est à noter que l'ajout ou le retrait de modules au sein du système de convoyage ne nécessite pas de reconfiguration, les informations propagées se mettant à jour automatiquement. Il n'y a pas de limite de longueur de tronçon définie.

Optionnellement, on peut prévoir une validation de l'auto-adressage des zones sur le bus P2P, via une commande sur le même bus, si l'on souhaite l'utiliser pour modifier individuellement les paramètres de fonctionnement des zones. A noter que l'adressage est réalisé sur les zones et non sur les cartes de contrôle ce qui permet d'accéder individuellement à chaque zone (pilotage individuel de zone).

Dans l'exemple de la figure 2, l'unité de pilotage 210 comprend un processeur 2102 (ou CPU, pour « Central Processing Unit » en anglais), une mémoire RAM 2101 et une mémoire ROM 2103 stockant un programme d'ordinateur. A l'initialisation, les instructions du code du programme d'ordinateur sont par exemple chargées dans la mémoire RAM 2101 avant d'être exécutées par le processeur 2102. Le fonctionnement de l'unité de pilotage 210 est détaillé ci-après, en relation avec la figure 3.

La figure 2 illustre seulement une manière particulière, parmi plusieurs possibles, de réaliser les différents algorithmes exécutés par l'unité de pilotage 210. En effet, l'unité de pilotage 210 se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où l'unité de pilotage 210 est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans une variante (non illustrée, car pouvant se déduire aisément et directement de l'exemple de la figure 2), le module est un module simple comprenant un dispositif de contrôle et une seule zone (par exemple celle référencée 22 sur la figure 2). Le dispositif de contrôle se distingue de celui référencé 21 sur la figure 2 en ce qu'il ne comprend pas les connecteurs référencés A2, B2 et C2, et en ce que les algorithmes qu'il exécute (cf description de la figure 3) ne servent à piloter qu'une seule zone.

Dans encore une autre variante (non illustrée, car pouvant se déduire aisément et directement de l'exemple de la figure 2), le module est un module multiple comprenant un dispositif de contrôle et N zones, avec N supérieur ou égal à trois. Le dispositif de contrôle se distingue de celui référencé 21 sur la figure 2 en ce qu'il comprend un jeu de connecteurs A, B et C (identiques aux connecteurs A1, B1 et C1) pour chacune des zones pilotées, et en ce que les algorithmes qu'il exécute ne servent à piloter les N zones.

Chaque module (qu'il s'agisse d'un module simple, double ou multiple, aux sens définis ci-dessus) est de manière préférentielle un ensemble pré-assemblé, disponible avant installation du système complet (comprenant plusieurs modules) sur un site d'exploitation.

En résumé, chaque module peut gérer une ou plusieurs zones de convoyage. Ces modules peuvent être assimilés à des machines autonomes possédant leur propre structure mécanique, leur propre distribution électrique, leurs propres capteurs et actionneurs et leur propre unité de pilotage (carte électronique de contrôle ou API). Ces modules se connectent entre eux à l'aide de connecteurs électriques et communiquent entre eux dès qu'ils sont raccordés sans configuration particulière (« plug & play »).

Ces modules étant standards et paramétrables, il n'est pas nécessaire d'avoir localisé les fonctions spécifiques avant de lancer le matériel en fabrication et il est facile de déplacer une fonctionnalité spécifique au cours du cycle de vie de l'installation (exemple : un poste de travail affecté à une zone de convoyeur « n » peut être déplacée vers tout autre zone sans modification mécanique ni électrique majeure. Dans la même idée un nouveau poste de travail peut être ajouté à tout endroit de l'installation et à tout moment.

On présente maintenant, en relation avec la **figure 3****,** un système selon un mode de réalisation particulier de l'invention.

Dans cet exemple, le système de convoyage 30 comprend une pluralité de modules successifs (notés M1 à M4) assemblés selon une séquence déterminée et formant un tronçon de convoyage :
- le module M1 est un module double dont le dispositif de contrôle pilote des zones Z1 et Z2 (ce module M1 correspond à celui décrit en détail plus haut, en relation avec la figure 2) ;
- le module M2 est un module simple dont le dispositif de contrôle pilote une zone Z3 ;
- le module M3 est un module double dont le dispositif de contrôle pilote des zones Z4 et Z5 ;
- le module M4 est un module double dont le dispositif de contrôle pilote des zones Z6 et Z7.

Dans cet exemple, on a représenté deux charges (colis) 33, 34, présentes en zones Z1 et Z4 respectivement. La flèche référencée 35 indique le sens de convoyage.

On détaille maintenant les algorithmes exécutés par les dispositifs de contrôle (et plus précisément leurs unités de pilotage 210) compris dans les modules M1 à M4. Dans un seul souci de simplification, le dispositif de contrôle (référencé 21 sur la figure 2) compris dans chacun des modules M1 à M4 n'a pas été représenté sur la figure 3.

On décrit ci-après les trois algorithmes suivants, exécutés par l'unité de pilotage de chacun des dispositifs de contrôle :
- mécanisme de propagation et enrichissement d'informations de tronçon ;
- adaptation dynamique du comportement de chaque zone pilotée ;
- mécanisme de propagation d'informations de suivi de charges.

Ces algorithmes réalisent une gestion par zone, incluant pour chaque zone une gestion des interactions et communications avec les zones adjacentes. On rappelle que deux zones adjacentes sont pilotées : soit par le même dispositif de contrôle, qui dans ce cas gère en interne les interactions et communications entre les deux zones ; soit par deux dispositifs de contrôle, qui gèrent ensemble (chacun pour une des deux zones) les interactions et communications entre les deux zones.

### Mécanisme de propagation et enrichissement d'informations de tronçon

Au sein des dispositifs de contrôle, les unités de pilotage exécutent un mécanisme de propagation et enrichissement d'informations de tronçon (par exemple par incrémentation, pour chaque information, d'un compteur compris dans un message), de proche en proche entre zones Z1 à Z7, depuis les deux zones d'extrémité Z1 et Z7 du tronçon de convoyage 30. Ce mécanisme permet à chaque unité de pilotage de disposer, pour chaque zone qu'elle pilote, d'informations de tronçon relatives à des sous-tronçons, amont et aval, situés de part et d'autre de cette zone.

A titre d'exemple, on considère la zone Z4 qui, comme la zone Z5, est comprise dans le module double M3 et est donc gérée par l'unité de pilotage comprise dans le dispositif de contrôle de ce module M3. Pour cette zone Z4, le sous-tronçon amont 31 comprend les zones Z7, Z6 et Z5, et le sous-tronçon aval 32 comprend les zones Z3, Z2 et Z1. On rappelle que la flèche référencée 35 indique le sens de convoyage.

Les flèches référencées 36 symbolisent la propagation et l'enrichissement d'informations de tronçon, de l'amont vers l'aval, c'est-à-dire de la zone Z7 jusqu'à la zone Z1, et même au-delà de la zone Z1 (par exemple vers un autre tronçon aval (non représenté) ou un système de supervision informatique (non représenté).

Les flèches référencées 37 symbolisent la propagation et l'enrichissement d'informations de tronçon, de l'aval vers l'amont, c'est-à-dire de la zone Z1 jusqu'à la zone Z7, et même au-delà de la zone Z7 (par exemple vers un autre tronçon amont (non représenté) ou un système de supervision informatique (non représenté).

Pour chaque zone, les informations de tronçon comprennent par exemple (liste non exhaustive) :
- le nombre de modules compris dans le sous-tronçon amont ;
- le nombre de modules compris dans le sous-tronçon aval ;
- le nombre de zones comprises dans le sous-tronçon amont ;
- le nombre de zones comprises dans le sous-tronçon aval ;
- le nombre de zones libres comprises dans le sous-tronçon amont ;
- le nombre de zones libres comprises dans le sous-tronçon aval ;
- le nombre de zones libres adjacentes comprises dans le sous-tronçon amont ;
- le nombre de zones libres adjacentes comprises dans le sous-tronçon aval ;
- le nombre de zones vides comprises dans le sous-tronçon amont ;
- le nombre de zones vides comprises dans le sous-tronçon aval;
- le nombre de zones réservées comprises dans le sous-tronçon amont ;
- le nombre de zones réservées comprises dans le sous-tronçon aval ;
- le nombre de zones en défaut de bourrage dans le sous-tronçon amont ;
- le nombre de zones en défaut de bourrage dans le sous-tronçon aval ;
- le nombre de charges présentes dans le sous-tronçon amont;
- le nombre de charges présentes dans le sous-tronçon aval ;
- le nombre de charges en attente en extrémité du sous-tronçon amont ;
- le nombre de charges en attente en extrémité du sous-tronçon aval ;
- le nombre de charges présentes sur la zone adjacente du sous-tronçon amont;
- le nombre de charges présentes sur la zone adjacente du sous-tronçon aval ;
- le nombre d'actionneurs (rouleaux motorisés) en marche dans le sous-tronçon amont ;
- le nombre d'actionneurs en marche dans le sous-tronçon aval ;
- le nombre d'actionneurs en phase de démarrage dans le sous-tronçon amont ;
- le nombre d'actionneurs en phase de démarrage dans le sous-tronçon aval.

Dans ce qui précède, on utilise les définitions suivantes : une zone vide est une zone ne contenant pas de charge ; une zone libre est une zone pas encore vide mais dont la charge est en train de passer dans une zone adjacente ; une zone réservée est une zone qui peut laisser transiter une charge sans pouvoir la stocker (l'arrêter).

On notera que pour la zone Z7 d'extrémité amont, les informations relatives à son sous-tronçon aval sont des informations relatives à l'ensemble du tronçon 30. De même, pour la zone Z1 d'extrémité aval, les informations relatives à son sous-tronçon amont sont des informations relatives à l'ensemble du tronçon 30.

### Adaptation dynamique du comportement de chaque zone pilotée

Au sein des dispositifs de contrôle, chaque unité de pilotage adapte dynamiquement le comportement de chaque zone qu'elle pilote, en fonction des informations de tronçon dont elle dispose (grâce au mécanisme précité de propagation et enrichissement).

Les informations de tronçon peuvent être utilisées directement ou sous une forme dérivée. Dans le second cas, on utilise des informations dérivées des informations de tronçon, comme par exemple le taux de remplissage du tronçon (donné par le rapport entre le nombre de charges présentes dans le tronçon et le nombre de zones formant le tronçon).

L'adaptation dynamique du comportement d'une zone donnée consiste par exemple à agir sur un ou plusieurs des paramètres suivants (liste non exhaustive) :
- la vitesse de convoyage de la zone donnée, et un ou plusieurs paramètres de fonctionnement qui dépendent de la vitesse de convoyage ;
- le nombre total, pour le tronçon de convoyage, de zones dont l'actionneur (rouleau motorisé) est en phase de démarrage ;
- le nombre total, pour le tronçon de convoyage, de zones dont l'actionneur est en marche.

La modification dynamique de la vitesse de convoyage (par rapport à la vitesse de convoyage nominale résultant de la configuration discutée ci-dessus) influence les paramètres de fonctionnement qui lui sont dépendants. Par exemple, si la consigne de déclaration d'un défaut de type « bourrage » est positionné à 1s à 1m/s (vitesse de convoyage nominale), la réduction de la vitesse de convoyage à 0.5m/s fera passer automatiquement cette consigne de sécurité à 2s, pour respecter la cohérence du contrôle et ne pas générer de défauts intempestifs.

Dans l'exemple de la figure 3, on suppose qu'un colis 34 est bloqué en extrémité aval du convoyeur 30, dans la zone Z1. Le dispositif de contrôle (ou plus précisément son unité de pilotage) compris dans le module M3 reçoit une information en ce sens (« une charge 34 en attente en extrémité du sous-tronçon aval 32 »), et décide par exemple, au vu de cette information, de réduire la vitesse de convoyage (vitesse de transfert) du colis 33 (actuellement en zone Z4) vers la zone Z3, pour limiter la consommation électrique.

Plus généralement, il est possible de définir un ensemble de règles sur la base des informations de tronçon (informations relatives aux sous-tronçons aval et amont, pour chaque zone).

En d'autres termes, avec l'ensemble des informations disponibles en tout endroit dans le tronçon, chaque dispositif de contrôle peut modifier le comportement de chacune des zones qu'il pilote, pour réaliser des optimisations comme par exemple :
- réduire la vitesse de convoyage de la zone si le sous-tronçon aval est saturé ou ralenti (limitation de la consommation d'énergie et préservation des composants électromécaniques - Rien ne sert de transférer une charge à grande vitesse si elle doit s'arrêter dans deux mètres car le convoyeur est saturé ou en passe de l'être) ;
- a contrario, la vitesse de convoyage de la zone peut être augmentée si le taux de remplissage du sous-tronçon aval est faible et ainsi réduire le temps de transit de la charge et améliorer ponctuellement la performance en cadence instantanée. Exemple de situation : si un convoyeur est vide car il n'a pas pu être alimenté normalement (exemple : défaut d'un équipement en amont) le système va augmenter sa vitesse lorsqu'il sera à nouveau alimenté pour tirer le flux et favoriser le réamorçage du tronçon ;
- contrôle et limitation du nombre maximal de zones en cours de démarrage, afin de contenir les éventuels appels de courant et mieux dimensionner les alimentations électriques ;
- le nombre de zones en cours de fonctionnement peut lui aussi être contrôlé et limité si l'on accepte une réduction de la performance globale du convoyeur. Par exemple, ce mode de fonctionnement « économique » est activable/désactivable à distance, via le bus P2P, et s'applique à l'ensemble du tronçon.

### Mécanisme de propagation d'informations de suivi de charges

Au sein des dispositifs de contrôle, les unités de pilotage exécutent un mécanisme de propagation de suivi de charges, de proche en proche entre zones, permettant de faire transiter, entre les deux zones Z7, Z1 d'extrémité du tronçon de convoyage 30, des informations de suivi relatives à des charges 33, 34 transportées par le système.

## Revendications

1. Système de convoyage (30) comprenant au moins trois modules successifs (M1 à M4) assemblés selon une séquence déterminée et formant un tronçon de convoyage, chaque module comprenant un dispositif de contrôle (21) et au moins une zone (22,23 ; Z1 à Z7) associée à et pilotée par le dispositif de contrôle, chaque dispositif de contrôle, compris dans un module donné, comprenant des moyens (211a, 211b) de communication avec les dispositifs de contrôle compris dans les modules placés de part et d'autre du module donné dans la séquence, chaque zone comprenant au moins un actionneur (24), recevant un signal de commande venant du dispositif de contrôle associé, et au moins un capteur (26), émettant un signal de présence vers le dispositif de contrôle associé,
**caractérisé en ce que** les dispositifs de contrôle comprennent des moyens (210) d'exécution d'un mécanisme de propagation et enrichissement d'informations quantitatives de tronçon, de proche en proche entre zones et par incrémentation d'un compteur pour chaque information quantitative, depuis les deux zones d'extrémité du tronçon de convoyage, permettant de disposer, pour chaque zone :
- d'au moins une première information quantitative de tronçon, propagée et enrichie de l'amont vers l'aval et relative à toutes les zones d'un sous-tronçon amont situé en amont de ladite zone, et/ou
- d'au moins une deuxième information quantitative de tronçon, propagée et enrichie de l'aval vers l'amont et relative à toutes les zones d'un sous-tronçon aval situé en aval de ladite zone,
et **en ce que** chaque dispositif de contrôle comprend des moyens (210) d'adaptation dynamique du comportement de chaque zone qu'il pilote, en fonction de ladite au moins une première information quantitative de tronçon et/ou de ladite au moins une deuxième information quantitative de tronçon, dont il dispose pour ladite zone grâce au mécanisme de propagation et enrichissement.

2. Système selon la revendication 1, **caractérisé en ce que**, pour chaque zone, ladite au moins une première information quantitative de tronçon et ladite au moins une deuxième information quantitative de tronçon appartiennent au groupe comprenant :
- le nombre de modules compris dans le sous-tronçon amont ou aval de ladite zone ;
- le nombre de zones comprises dans le sous-tronçon amont ou aval de ladite zone ;
- le nombre de zones libres comprises dans le sous-tronçon amont ou aval de ladite zone ;
- le nombre de zones libres adjacentes comprises dans le sous-tronçon amont ou aval de ladite zone ;
- le nombre de zones vides comprises dans le sous-tronçon amont ou aval de ladite zone ;
- le nombre de zones réservées comprises dans le sous-tronçon amont ou aval de ladite zone ;
- le nombre de zones en défaut de bourrage dans le sous-tronçon amont ou aval de ladite zone ;
- le nombre de charges présentes dans le sous-tronçon amont ou aval de ladite zone ;
- le nombre de charges en attente en extrémité du sous-tronçon amont ou aval de ladite zone ;
- le nombre de charges présentes sur la zone adjacente du sous-tronçon amont ou aval de ladite zone ;
- le nombre d'actionneurs en marche dans le sous-tronçon amont ou aval de ladite zone ;
- le nombre d'actionneurs en phase de démarrage dans le sous-tronçon amont ou aval de ladite zone.

3. Système selon l'une quelconque des revendications 1 et 2, **caractérisé en ce que** les moyens d'adaptation dynamique du comportement d'une zone donnée agissent sur au moins un paramètre appartenant au groupe comprenant :
- la vitesse de convoyage de la zone donnée ;
- le nombre total, pour le tronçon de convoyage, de zones dont l'actionneur est en phase de démarrage ;
- le nombre total, pour le tronçon de convoyage, de zones dont l'actionneur est en marche.

4. Système selon la revendication 3, **caractérisé en ce que** les moyens d'adaptation dynamique du comportement d'une zone donnée agissent sur la vitesse de convoyage de la zone donnée, et sur au moins un paramètre de fonctionnement qui est dépendant de ladite vitesse de convoyage.

5. Système selon l'une quelconque des revendications 1 à 4, **caractérisé en ce que** les dispositifs de contrôle comprennent des moyens (210) d'exécution d'un mécanisme de propagation d'informations de suivi de charges, de proche en proche entre zones, permettant de faire transiter, entre les deux zones d'extrémité du tronçon de convoyage, des informations de suivi relatives à des charges transportées par le système.

6. Système selon l'une quelconque des revendications 1 à 5, **caractérisé en ce que** chaque dispositif de contrôle comprend des moyens (B1, B2) de configuration permettant de définir, pour chaque zone pilotée :
- une fonction, parmi une fonction de convoyage et au moins une fonction spécifique, liée à la nature du ou des équipements, y compris ledit au moins un actionneur, compris dans ladite zone pilotée ; et
- des paramètres de fonctionnement nominaux associés à ladite fonction, y compris une vitesse de convoyage nominale.

7. Système selon la revendication 6, **caractérisé en ce que** ladite au moins une fonction spécifique appartient au groupe comprenant :
- une fonction de poste de préparation de commandes ;
- une fonction de poste de réintroduction de charges ;
- une fonction de poste d'étiquetage ;
- une fonction de poste de contrôle.

8. Système selon l'une quelconque des revendications 1 à 7, **caractérisé en ce que** chaque module est un ensemble pré-assemblé, disponible avant installation du système sur un site d'exploitation.

9. Procédé de gestion d'un système de convoyage comprenant au moins trois modules successifs assemblés selon une séquence déterminée et formant un tronçon de convoyage, chaque module comprenant un dispositif de contrôle et au moins une zone associée à et pilotée par le dispositif de contrôle, chaque dispositif de contrôle, compris dans un module donné, comprenant des moyens de communication avec les dispositifs de contrôle compris dans les modules placés de part et d'autre du module donné dans la séquence, chaque zone comprenant au moins un actionneur, recevant un signal de commande venant du dispositif de contrôle associé, et au moins un capteur, émettant un signal de présence vers le dispositif de contrôle associé, **caractérisé en ce que** chacun des dispositifs de contrôle effectue :
- un mécanisme de propagation et enrichissement d'informations quantitatives de tronçon, de proche en proche entre zones et par incrémentation d'un compteur pour chaque information quantitative, depuis les deux zones d'extrémité du tronçon de convoyage, permettant de disposer, pour chaque zone :
* d'au moins une première information quantitative de tronçon, propagée et enrichie de l'aval vers l'amont et relative à toutes les zones d'un sous-tronçon amont, situé en amont de ladite zone ; et
* d'au moins une deuxième information quantitative de tronçon, propagée et enrichie de l'amont vers l'aval et relative à toutes les zones d'un sous-tronçon aval, situé en aval de ladite zone ; et
- une adaptation dynamique du comportement de chaque zone qu'il pilote, en fonction de ladite au moins une première information quantitative de tronçon et/ou de ladite au moins une deuxième information quantitative de tronçon, dont il dispose pour ladite zone grâce au mécanisme de propagation et enrichissement.

10. Utilisation d'un produit programme d'ordinateur dans un système selon l'une quelconque des revendications 1 à 8, ledit produit programme d'ordinateur comprenant des instructions de code de programme pour la mise en oeuvre du procédé selon la revendication 9, lorsque ledit programme est exécuté sur un ordinateur.

11. Utilisation d'un médium de stockage dans un système selon l'une quelconque des revendications 1 à 8, ledit médium de stockage (2103) étant lisible par ordinateur et non transitoire, et stockant un programme d'ordinateur comprenant un jeu d'instructions exécutables par un ordinateur ou un processeur pour mettre en oeuvre le procédé selon la revendication 9.

## Patentansprüche

1. Fördersystem (30), umfassend mindestens drei aufeinanderfolgende Module (M1 bis M4), die gemäß einer bestimmten Sequenz zusammengesetzt sind und einen Förderabschnitt bilden, wobei jedes Modul eine Steuervorrichtung (21) und mindestens eine Zone (22, 23; Z1 bis Z7) umfasst, die mit der Steuervorrichtung assoziiert ist und von dieser gesteuert wird, wobei jede Steuervorrichtung, die in einem gegebenen Modul enthalten ist, Mittel (211a, 211b) zur Kommunikation mit den in den Modulen enthaltenen Steuervorrichtungen umfasst, die auf beiden Seiten des gegebenen Moduls in der Sequenz platziert sind, wobei jede Zone mindestens einen Betätiger (24), der ein Steuersignal, das von der assoziierten Steuervorrichtung kommt, empfängt, und mindestens einen Sensor (26), der ein Anwesenheitssignal an die assoziierte Steuervorrichtung ausgibt, umfasst,
**dadurch gekennzeichnet, dass** die Steuervorrichtungen Mittel (210) zur Ausführung eines Mechanismus zur Propagation und Erweiterung von quantitativen Informationen des Abschnitts mit der Zeit zwischen den Zonen und durch Inkrementierung eines Zählers für jede quantitative Information von den beiden Endzonen des Förderabschnitts umfassen, wobei gestattet wird, für jede Zone über Folgendes zu verfügen:
- mindestens eine erste quantitative Information des Abschnitts, die von stromaufwärts nach stromabwärts und relativ zu allen Zonen eines stromaufwärtigen Unterabschnitts, der stromaufwärts von der Zone angeordnet ist, propagiert und erweitert wird, und/oder
- mindestens eine zweite quantitative Information des Abschnitts, die von stromabwärts nach stromaufwärts und relativ zu allen Zonen eines stromabwärtigen Unterabschnitts, der stromabwärts von der Zone angeordnet ist, propagiert und erweitert wird,
und dadurch, dass jede Steuervorrichtung Mittel (210) zur dynamischen Anpassung des Verhaltens jeder Zone, die sie steuert, als Funktion der mindestens einen ersten quantitativen Information des Abschnitts und/oder der mindestens einen zweiten quantitativen Information des Abschnitts, über die sie für die Zone aufgrund des Propagations- und Erweiterungsmechanismus verfügt, umfasst.

2. System nach Anspruch 1, **dadurch gekennzeichnet, dass** für jede Zone die mindestens eine erste quantitative Information des Abschnitts und die mindestens eine zweite quantitative Information des Abschnitts zur Gruppe gehören, umfassend:
- die Anzahl von Modulen, die in dem Unterabschnitt stromaufwärts oder stromabwärts von der Zone enthalten sind;
- die Anzahl von Zonen, die in dem Unterabschnitt stromaufwärts oder stromabwärts von der Zone enthalten sind;
- die Anzahl freier Zonen, die in dem Unterabschnitt stromaufwärts oder stromabwärts von der Zone enthalten sind;
- die Anzahl benachbarter freier Zonen, die in dem Unterabschnitt stromaufwärts oder stromabwärts von der Zone enthalten sind;
- die Anzahl leerer Zonen, die in dem Unterabschnitt stromaufwärts oder stromabwärts von der Zone enthalten sind;
- die Anzahl reservierter Zonen, die in dem Unterabschnitt stromaufwärts oder stromabwärts von der Zone enthalten sind;
- die Anzahl staufreier Zonen in dem Unterabschnitt stromaufwärts oder stromabwärts von der Zone;
- die Anzahl von Lasten, die in dem Unterabschnitt stromaufwärts oder stromabwärts von der Zone vorhanden sind;
- die Anzahl wartender Lasten am Ende des Unterabschnitts stromaufwärts oder stromabwärts von der Zone;
- die Anzahl von Lasten, die in der Zone benachbart dem Unterabschnitt stromaufwärts oder stromabwärts von der Zone vorhanden sind;
- die Anzahl von arbeitenden Betätigern in dem Unterabschnitt stromaufwärts oder stromabwärts von der Zone;
- die Anzahl von Betätigern in der Startphase in dem Unterabschnitt stromaufwärts oder stromabwärts von der Zone.

3. System nach einem der Ansprüche 1 und 2, **dadurch gekennzeichnet, dass** die Mittel zur dynamischen Anpassung des Verhaltens einer gegebenen Zone auf mindestens einen Parameter einwirken, der zur Gruppe gehört, umfassend:
- die Fördergeschwindigkeit der gegebenen Zone;
- die Gesamtanzahl, für den Förderabschnitt, von Zonen, deren Betätiger in der Startphase ist;
- die Gesamtanzahl, für den Förderabschnitt, von Zonen, deren Betätiger arbeitet.

4. System nach Anspruch 3, **dadurch gekennzeichnet, dass** die Mittel zur dynamischen Anpassung des Verhaltens einer gegebenen Zone auf die Fördergeschwindigkeit der gegebenen Zone und auf mindestens einen Betriebsparameter einwirken, der von der Fördergeschwindigkeit abhängig ist.

5. System nach einem der Ansprüche 1 bis 4, **dadurch gekennzeichnet, dass** die Steuervorrichtungen Mittel (210) zur Ausführung eines Mechanismus zur Propagation von Informationen über die Überwachung von Lasten mit der Zeit zwischen Zonen umfassen, die es gestatten, zwischen den beiden Endzonen des Förderabschnitts Informationen über die Überwachung in Bezug auf von dem System transportierte Lasten zu transferieren.

6. System nach einem der Ansprüche 1 bis 5, **dadurch gekennzeichnet, dass** jede Steuervorrichtung Auslegungsmittel (B1, B2) umfasst, die es gestatten, für jede gesteuerte Zone Folgendes zu definieren:
- eine Funktion, unter einer Förderfunktion und mindestens einer spezifischen Funktion, die mit der Beschaffenheit der Ausrüstung oder Ausrüstungen verbunden ist, darunter der mindestens eine Betätiger, der in der gesteuerten Zone enthalten ist; und
- nominale Betriebsparameter, die mit der Funktion assoziiert sind, darunter eine nominale Fördergeschwindigkeit.

7. System nach Anspruch 6, **dadurch gekennzeichnet, dass** die mindestens eine spezifische Funktion zur Gruppe gehört, umfassend:
- eine Betriebsfunktion zur Erteilung von Befehlen;
- eine Betriebsfunktion zur Wiedereinführung von Lasten;
- eine Betriebsfunktion zur Kennzeichnung;
- eine Betriebsfunktion zur Steuerung.

8. System nach einem der Ansprüche 1 bis 7, **dadurch gekennzeichnet, dass** jedes Modul eine im Voraus zusammengesetzte Einheit ist, die vor der Installation des Systems an einem Einsatzort verfügbar ist.

9. Verfahren zur Steuerung eines Fördersystems, umfassend mindestens drei aufeinanderfolgende Module, die gemäß einer bestimmten Sequenz zusammengesetzt sind und einen Förderabschnitt bilden, wobei jedes Modul eine Steuervorrichtung und mindestens eine Zone umfasst, die mit der Steuervorrichtung assoziiert ist und von dieser gesteuert wird, wobei jede Steuervorrichtung, die in einem gegebenen Modul enthalten ist, Mittel zur Kommunikation mit den in den Modulen enthaltenen Steuervorrichtungen umfasst, die auf beiden Seiten des gegebenen Moduls in der Sequenz platziert sind, wobei jede Zone mindestens einen Betätiger, der ein Steuersignal, das von der assoziierten Steuervorrichtung kommt, empfängt, und mindestens einen Sensor, der ein Anwesenheitssignal an die assoziierte Steuervorrichtung ausgibt, umfasst,
**dadurch gekennzeichnet, dass** jede Steuervorrichtung Folgendes ausführt:
- einen Mechanismus zur Propagation und Erweiterung von quantitativen Informationen des Abschnitts mit der Zeit zwischen den Zonen und durch Inkrementierung eines Zählers für jede quantitative Information von den beiden Endzonen des Förderabschnitts, wobei gestattet wird, für jede Zone über Folgendes zu verfügen:
* mindestens eine erste quantitative Information des Abschnitts, die von stromabwärts nach stromaufwärts und relativ zu allen Zonen eines stromaufwärtigen Unterabschnitts, der stromaufwärts von der Zone angeordnet ist, propagiert und erweitert wird; und
* mindestens eine zweite quantitative Information des Abschnitts, die von stromaufwärts nach stromabwärts und relativ zu allen Zonen eines stromabwärtigen Unterabschnitts, der stromabwärts von der Zone angeordnet ist, propagiert und erweitert wird; und
- eine dynamische Anpassung des Verhaltens jeder Zone, die sie steuert, als Funktion der mindestens einen ersten quantitativen Information des Abschnitts und/oder der mindestens einen zweiten quantitativen Information des Abschnitts, über die sie für die Zone aufgrund des Propagations- und Erweiterungsmechanismus verfügt.

10. Verwendung eines Computerprogrammprodukts in einem System nach einem der Ansprüche 1 bis 8, wobei das Computerprogrammprodukt Codeprogramminstruktionen zur Durchführung des Verfahrens nach Anspruch 9 umfasst, wenn das Programm auf einem Computer ausgeführt wird.

11. Verwendung eines Speichermediums in einem System nach einem der Ansprüche 1 bis 8, wobei das Speichermedium (2103) computerlesbar und nichttransitorisch ist und ein Computerprogramm speichert, das einen Satz von Instruktionen umfasst, die von einem Computer oder einem Prozessor zur Durchführung des Verfahrens nach Anspruch 9 ausführbar sind.

## Claims

1. Conveyor system (30) comprising at least three successive modules (M1 to M4) assembled in a specific sequence and forming a conveying section, each module comprising a control device (21) and at least one zone (22, 23; Z1 to Z7) associated with and controlled by the control device, each control device, included in a given module, comprising means (211a, 211b) for communicating with the control devices included in the modules placed on either side of the given module in the sequence, each zone comprising at least one actuator (24), receiving a control signal from the associated control device, and at least one sensor (26) transmitting a presence signal to the associated control device, **characterised in that** the control devices comprise means (210) for executing a mechanism for propagation and enhancement of quantitative section information, step by step between zones and by incrementation of a counter for each piece of quantitative information, from the two end zones of the conveying section, enabling each zone to be provided with:
- at least one first piece of quantitative section information propagated and enhanced from upstream to downstream and relative to all the zones of an upstream sub-section situated upstream of said zone, and / or
- at least one second piece of quantitative section information propagated and enhanced from downstream to upstream and relative to all the zones of a downstream sub-section situated downstream of said zone
and **characterised in that** each control device comprises means (210) for dynamic adaptation of the behaviour of each zone that it controls, as a function of said at least one first piece of quantitative section information and/or said at least one second piece of quantitative section information available for said zone by means of the propagation and enhancement mechanism.

2. System according to claim 1, **characterised in that** for each zone said at least one first piece of quantitative section information and said at least one second piece of quantitative section information belong to the group comprising:
- the number of modules included in the sub-section upstream or downstream of said zone;
- the number of zones included in the sub-section upstream or downstream of said zone;
- the number of free zones included in the sub-section upstream or downstream of said zone;
- the number of adjacent free zones included in the sub-section upstream or downstream of said zone;
- the number of empty zones included in the sub-section upstream or downstream of said zone;
- the number of reserved zones included in the sub-section upstream or downstream of said zone;
- the number of zones in which there is no jamming malfunction in the sub-section upstream or downstream of said zone;
- the number of loads present in the sub-section upstream or downstream of said zone;
- the number of loads pending at the end of the sub-section upstream or downstream of said zone;
- the number of loads present in the adjacent zone of the sub-section upstream or downstream of said zone;
- the number of actuators in operation in the sub-section upstream or downstream of said zone;
- the number of actuators in a starting phase in the sub-section upstream or downstream of said zone.

3. System according to either of claims 1 and 2, **characterised in that** the means for dynamically adapting the behaviour of a given zone act on at least one parameter belonging to the group comprising:
- the conveying speed of the given zone;
- The total number, for the conveying section, of zones whose actuator is in the starting phase;
- the total number, for the conveying section, of zones whose actuator is in operation.

4. System according to claim 3, **characterised in that** the means for dynamically adapting the behaviour of a given zone act on the conveying speed of the given zone and on at least one operating parameter which is dependent on said conveying speed.

5. System according to any one of claims 1 to 4, **characterised in that** the control devices comprise means (210) for executing a mechanism for propagating load tracking information, from one zone to the next between zones, enabling the transfer, between the two end zones of the conveying section, of tracking information on the loads transported by the system.

6. System according to any one of claims 1 to 5, **characterised in that** each control device comprises means of configuration (B1, B2) enabling the following to be defined, for each controlled zone:
- one function, from among a conveying function and at least one specific function, related to the nature of the apparatus or apparatuses, including said at least one actuator, included in said controlled zone; and
- nominal parameters of operation associated with said function, including a nominal conveying speed.

7. System according to claim 6, **characterised in that** said at least one specific function belongs to the group comprising:
- a picking station function;
- a load-reintroduction station function;
- a labelling station function;
- a control centre function.

8. System according to any one of claims 1 to 7, **characterised in that** each module is a pre-assembled set available prior to installation of the system on an operating site.

9. Method for managing a conveying system comprising at least three successive modules assembled in a specific sequence and forming a conveying section, each module comprising a control device and at least one zone associated with and controlled by the control device, each control device included in a given module comprising means for communicating with the control devices included in the modules placed on either side of the given module in the sequence, each zone comprising at least one actuator receiving a control signal coming from the associated control device, and at least one sensor emitting a presence signal to the associated control device, **characterised in that** each of the control devices performs:
- a mechanism of propagation and enhancement of quantitative section information, from one zone to the next between zones and by incrementation of a counter for each piece of quantitative information, from the two end zones of the conveying section, enabling each zone to be provided with:
* at least one first piece of quantitative section information propagated and enhanced from downstream to upstream and relating to all the zones of an upstream sub-section, situated upstream to said zone; and
* at least one second piece of quantitative section information propagated and enhanced from upstream to downstream and relating to all the zones of a downstream sub-section, situated downstream to said zone; and
- a dynamic adaptation of the behaviour of each zone that it controls, as a function of said at least one first piece of quantitative section information and/or said at least one second piece of quantitative section information, available to said zone by means of the propagation and enhancement mechanism.

10. Use of a computer program product in a system according to any one of claims 1 to 8, said computer program product comprising program code instructions for implementing the method according to claim 9, when said program is executed on a computer.

11. Use of a storage medium in a system according to any one of claims 1 to 8, said medium being a computer-readable and non-transient storage medium (2103) and storing a computer program comprising a set of instructions executable by a computer or processor for implementing the method according to claim 9.
